# EUROPÄISCHE PATENTSCHRIFT

(11) **EP 1 887 244 B1**
(45) Veröffentlichungstag und Bekanntmachung des Hinweises auf die Patenterteilung: **30.05.2012**
(21) Anmeldenummer: 07014432.4
(22) Anmeldetag: 23.07.2007
(51) Int. Cl.: F16D 48/06

(54) **Verfahren zur Überprüfung der Kupplungsposition einer mittels eines Aktors automatisiert betätigten Kupplung**
Method for checking the position of a clutch automatically actuated by an actuator
Procédé destiné à la surveillance de la position d'un embrayage actionné à l'aide d'un actionneur automatisé

(30) Priorität: 09.08.2006 DE 102006037131
(43) Veröffentlichungstag der Anmeldung: 13.02.2008
(73) Patentinhaber: Schaeffler Technologies AG & Co. KG, 91074 Herzogenaurach (DE)
(72) Erfinder: Eich, Jürgen, Dr., 77815 Bühl (DE); Küpper, Klaus, Dr., 77815 Bühl (DE); Nguyen, Minh Nam, Dr., 77815 Bühl (DE)

(56) Entgegenhaltungen:
- EP-A2- 1 437 520
- DE-A1- 19 652 244
- FR-A1- 2 649 366

## Beschreibung

Die vorliegende Erfindung betrifft ein Verfahren zur Überprüfung der Kupplungsposition einer mittels eines Aktors automatisiert betätigten Kupplung im Triebstrang eines einen Antriebsmotors aufweisenden Fahrzeugs mittels des von der Kupplung übertragenen Kupplungsmoments nach dem Oberbegriff des Anspruchs 1.

Ein Verfahren zur automatisierten Steuerung einer Kupplung ist beispielsweise aus FR 264 9 366 bekannt.

Aus der Fahrzeugtechnik ist die Verwendung eines Aktors zur automatisierten Betätigung einer Kupplung im Triebstrang eines Fahrzeugs bekannt. Um nun die Kupplung so anzusteuern, dass sie das für den jeweiligen Fahrzeugzustand gewünschte Moment überträgt, ist die Kenntnis der Kupplungsposition erforderlich. Um nun die Kupplungsposition in Erfahrung zu bringen, kann auf eine am Aktor vorhandene Wegmesseinrichtung zurückgegriffen werden, bei der es sich um eine Absolutwegmessung oder um eine Inkrementalwegmessung handeln kann. Bei der Inkrementalwegmessung werden nur Positionsveränderungen erfasst und die aktuelle Absolutposition muss, ausgehend von einer bekannten Startposition, durch Integration der Positionsänderungen ermittelt werden.

Wenn nun im Fall einer Inkrementalwegmessung beispielsweise von einem fehlerbehafteten Startwert ausgegangen wird, oder die Einrichtung zur Ermittlung der Kupplungsposition, bei der es sich um ein im Fahrzeug vorhandenes Steuergerät in der Form beispielsweise des Kupplungssteuergeräts handeln kann, eine fehlerbehaftete Absolutposition für den Kupplungsaktor berechnet, so kann eine solche fehlerhaft berechnete Absolutposition dazu führen, dass die Kupplung vom Aktor beispielsweise weiter geschlossen wird, als dies im betrachteten Anwendungsfall gerade notwendig ist.

So kann es als Anwendungsfall beispielsweise gewünscht sein, ein geringes Kupplungsmoment an der Kupplung einzustellen in der Höhe von beispielsweise 1 bis 5 Nm, um den Triebstrang des Fahrzeugs geringfügig zu verspannen, um Rasselschwingungen im Getriebe zu verhindern. Wird nun statt dieses gewünschten Verspannmoments aufgrund einer fehlerhaft bestimmten Absolutposition der Kupplung der Aktor so betätigt, dass er die Kupplung weiter zufährt und diese ein höheres Kupplungsmoment überträgt, so kann dies zu einem Ankriechen oder gar Anfahren des Fahrzeugs führen anstelle nur dazu, den Triebstrang geringfügig zu verspannen.

Bei der Verwendung einer Inkrementalwegmessung ist es also erforderlich, dass die Inkrementalwegmessung regelmäßig überprüft und gegebenenfalls abgeglichen wird, d. h. eine entsprechende Referenzierung durchgeführt wird. Um nun einen solchen Abgleich der Inkrementalwegmessung durchzuführen, kann ein Anschlag tastend angefahren werden, wobei die Position des Anschlags als neuer Nullpunkt oder Referenzpunkt zum Abgleich der Inkrementalwegmessung verwendet werden kann.

Eine solche Vorgehensweise ist beispielsweise anhand der DE 44 33 825 A1 bekannt geworden, die eine Stelleinrichtung für eine Reibungskupplung eines Kraftfahrzeugs beschreibt und die Stelleinrichtung eine Kupplungslageregelung umfasst. Bei diesem bekannten Verfahren zum Erkennen eines Anschlags werden Signale des Aktors, wie beispielsweise der Strom, die Geschwindigkeit, die Drehrichtung sowie die Signale eines Inkrementalgebers verwendet und ausgewertet, um einen Anschlag zu erkennen. Somit wird das Erkennen eines Anschlages durch die Auswertung von aktorinternen Signalen des Kupplungsaktors ermöglicht.

Wenn nun dieses bekannte Verfahren zur Referenzierung der Kupplungsposition herangezogen wird, so kann die Kupplungsposition aber entlang des Verfahrwegs des Aktors nur an zwei definierten Stellen ermittelt werden, nämlich an einem Anschlag bei vollständig geschlossener Kupplung und an einem Anschlag bei vollständig offener Kupplung. Somit steht diese Möglichkeit der Anschlagerkennung während eines normalen Fahrbetriebs des Fahrzeugs nur bei den beschriebenen Sondersituationen zur Verfügung, nämlich nur bei vollständig geschlossener und bei vollständig offener Kupplung. Nimmt die Kupplung aber eine Zwischenstellung, beispielsweise einen Schlupfzustand an, so fällt diese Möglichkeit der Referenzierung der Kupplungsposition mittels Anschlagserkennung bereits ersatzlos weg.

Insbesondere bei Doppelkupplungsgetrieben oder Parallelschaltgetrieben werden Kupplungsaktoren mit inkrementeller Wegmessung eingesetzt, die lediglich Positionsveränderungen, nicht jedoch Absolutpositionen erfassen können. Um nun im Gegensatz zu der vorstehend beschriebenen Vorgehensweise mittels der Anschlagerkennung die Möglichkeit der Referenzierung oder Plausibilisierung der Kupplungsposition in nicht nur einer bestimmten Fahrsituation, nämlich bei vollständig offener oder vollständig geschlossener Kupplung, zu ermöglichen, besteht Bedarf an einem Verfahren, die Plausibilisierung der Absolutposition der Kupplung fahrsituationsunabhängig durchführen zu können.

Anhand der auf die Anmelderin zurückgehenden DE 2005 009 711 A1 ist bereits ein Verfahren zum Referenzieren einer Inkrementalwegmessung bei einer Bewegungsübertragung zwischen einem Aktor und einer Kupplung eines automatisiert betätigten Getriebes in einem Antriebsstrang bekannt geworden. Dieses bekannte Verfahren sieht vor, dass eine Referenzposition des Aktors in Abhängigkeit eines von der Kupplung übertragenen Kupplungsmoments ermittelt wird.

Diese bekannte Verfahren macht daher Gebrauch von dem von der Kupplung übertragenen Kupplungsmoment und kommt ohne Anschlagerkennung aus. Dabei wird dem ermittelten Kupplungsmoment, also dem von der Kupplung übertragenen Moment, eine bestimmte Kupplungsposition zugeordnet und die zugeordnete Kupplungsposition entspricht einer bestimmten Position des Aktors, da die Kupplung durch den Aktor betätigt wird und mit diesem gekoppelt ist. Dabei wird eine Änderung des Kupplungsmoments bei der Bewegung des Aktors ausgewertet, um eine Referenzposition zum Abgleichen der Inkrementalwegmessung zu ermitteln.

Obwohl dieses bekannte Verfahren bereits eine wesentliche Verbesserung gegenüber der Referenzierung mittels Anschlagerkennung darstellt, besitzt es nach wie vor Raum für Verbesserungen.

Ausgehend hiervon liegt der vorliegenden Erfindung nunmehr die Aufgabe zugrunde, ein verbessertes Verfahren zur Überprüfung der Kupplungsposition einer mittels eines Aktors automatisiert betätigten Kupplung im Triebstrang eines einen Antriebsmotor aufweisenden Fahrzeugs mittels des von der Kupplung übertragenen Kupplungsmoments bereitzustellen.

Neben diesem Verfahren soll die Erfindung auch noch eine Vorrichtung zur Durchführung des Verfahrens bereitstellen.

Die Erfindung sieht nun hinsichtlich des Verfahrens ein Verfahren mit den Merkmalen des Anspruchs 1 vor. Vorteilhafte Ausgestaltungen des Verfahrens sind in den weiteren Ansprüchen beschrieben. Darüber hinaus schafft die Erfindung hinsichtlich der Vorrichtung eine Vorrichtung mit den Merkmalen des Anspruchs 12.

Zur Lösung der vorstehend geschilderten Aufgabe hinsichtlich des Verfahrens sieht die Erfindung nun ein Verfahren vor zur Überprüfung der Kupplungsposition einer mittels eines Aktors automatisiert betätigten Kupplung im Triebstrang eines einen Antriebsmotor aufweisenden Fahrzeugs mittels des von der Kupplung übertragenen Kupplungsmoments, wobei bei Vorliegen von Kupplungsschlupf anhand der aktuell angenommen Kupplungsposition ein erstes übertragenes Kupplungsmoment nach einer ersten Methode bestimmt wird und ein zweites übertragenes Kupplungsmoment nach einer zweiten Methode auf der Basis von Zustandsdaten des Antriebsmotors bestimmt wird und eine Differenz der nach beiden Methoden bestimmten übertragenen Kupplungsmomente ermittelt wird derart, dass die angenommene Kupplungsposition der tatsächlichen Kupplungsposition entspricht, wenn die Differenz kleiner einem vorbestimmbaren Schwellenwert ist.

Die Erfindung schafft daher ein Verfahren, welches bei Kupplungsschlupf das übertragene Kupplungsmoment nach zwei verschiedenen physikalischen Prinzipien redundant bestimmt und dann mittels eines Vergleichs der beiden Kupplungsmomente überprüft wird, ob die Ermittlung mit den beiden Methoden zu einem konsistenten Ergebnis führt. Liegt ein solches konsistentes Ergebnis vor, ist also die Differenz aus dem ersten und dem zweiten Kupplungsmoment kleiner als ein vorbestimmbarer Schwellenwert, so kann darauf geschlossen werden, dass die aktuell angenommene Kupplungsposition der tatsächlichen aktuellen Kupplungsposition entspricht und somit die aus der Inkrementalwegmessung bestimmte angenommene Kupplungsposition der tatsächlichen Kupplungsposition entspricht und damit eine Plausibilisierung und Referenzierung der aus der Inkrementalwegmessung bestimmten Kupplungsposition ermöglicht ist.

Die Bezeichnung als erstes und zweites Kupplungsmoment dienen dabei nur der Unterscheidung, nach welcher Methode das übertragene Kupplungsmoment bestimmt wird. Es wird also im Fall einer schlupfenden Kupplung eine Differenz gebildet zwischen dem nach der ersten Methode bestimmten übertragenen Kupplungsmoment und dem nach der zweiten Methode bestimmten übertragenen Kupplungsmoment und überprüft, ob die so gebildete Differenz kleiner ist als ein vorbestimmbarer Schwellenwert und damit die aus der Inkrementalwegmessung bestimmte angenommene Kupplungsposition tatsächlich der tatsächlichen Kupplungsposition entspricht.

Da zur Durchführung dieses Verfahrens keine Anschlagerkennung notwendig ist, kann dieses erfindungsgemäße Verfahren fahrsituationsunabhängig eingesetzt werden und ist unabhängig von Sonderaktionen, wie beispielsweise dem Ertasten von Anschlägen. Damit kann die Plausibilisierung und Referenzierung der Absolutposition der Kupplung während des normalen Fahrbetriebs des Fahrzeugs laufend durchgeführt werden und nicht nur dann, wenn die Kupplung vollständig offen ist oder vollständig geschlossen ist.

Nach einer Weiterbildung des erfindungsgemäßen Verfahrens ist es nun vorgesehen, dass der vorbestimmbare Schwellenwert in Anhängigkeit von zur Bestimmung der Differenz herangezogener Zustandsdaten und/oder der aktuell angenommenen Kupplungsposition bestimmt wird. So kann beispielsweise ein fahrsituationsabhängiger Grenzwert als vorbestimmbarer Schwellenwert verwendet werden, der in Abhängigkeit vom Motormoment, dem Kupplungsmoment, der Kupplungsposition oder anderer Parameter bestimmt wird.

Nach einer Weiterbildung der Erfindung ist es auch vorgesehen, dass das erste Kupplungsmoment anhand einer das Kupplungsmoment als Funktion der Kupplungsposition bestimmenden Beziehung bestimmt wird. Hier kann beispielsweise ein Kupplungsmodell herangezogen werden oder im einfachen Fall eine durch eine Kennlinie definierte Beziehung zwischen dem übertragenen Kupplungsmoment und der Kupplungsposition. Wird ein Kupplungsmodel als Beziehung zwischen dem Kupplungsmoment und der Kupplungsposition verwendet, so kann ein solches Kupplungsmodell auch Adaptionsstrategien beinhalten, durch die sein Übertragungsverhalten beispielsweise in Abhängigkeit vom Motormoment und der Motordrehzahl verändert wird. Eine solche Adaptionsstrategie kann beispielsweise die Adaption des Reibwerts der Kupplung oder eine Tastpunktadaption oder auch eine Formadaption (shape adaption) umfassen. Damit kann beispielsweise auch die Adaptionsgeschwindigkeit in das Verfahren Eingang finden, um mittel- und langfristige Änderungen im Verhalten der Kupplung zu kompensieren.

Nach einer Weiterbildung der Erfindung ist es vorgesehen, dass das nach der zweiten Methode bestimmte zweite übertragene Kupplungsmoment mittels eines Beobachters, insbesondere Störbeobachters, und der Drehzahl und des Motormoments des Antriebsmotors bestimmt wird. Das übertragene Kupplungsmoment tritt dabei als nicht messbare Störgröße für das Verhalten des Antriebsmotors auf und kann als eine zu schätzende Störgröße für das dynamische Verhalten des Antriebsmotors verwendet werden.

Dabei ermittelt der Störbeobachter mittels des Motormoments und der Motordrehzahl ein geschätztes übertragenes Kupplungsmoment, bei dem es sich beispielsweise bei einem Doppelkupplungsgetriebe auch um ein Summenmoment handeln kann. Dieses so ermittelte zweite Kupplungsmoment und das bei schlupfender Kupplung nach der ersten Methode ermittelte erste übertragene Kupplungsmoment können dann zur Differenzbildung herangezogen werden und dann mittels des vorstehend bereits beschriebenen beispielsweise auch fahrsituationsabhängigen Schwellenwerts eine Überprüfung vorgenommen werden, ob die so gebildete Differenz kleiner ist als der vorbestimmte Schwellenwert.

Ist diese Differenz kleiner als der vorbestimmbare Schwellenwert, so führt die Bestimmung des übertragenen Kupplungsmoments nach beiden Methoden zu einem konsistenten Ergebnis, woraus sich im Umkehrschluss ableiten lässt, dass die aktuell angenommene Kupplungssituation der tatsächlichen aktuellen Kupplungssituation entspricht, da aus dem übertragenen Kupplungsmoment über beispielsweise eine Kupplungskennlinie oder eine adaptierte Kupplungskennlinie oder das vorstehend bereits erwähnte Kupplungsmodell die Kupplungsposition ermittelt werden kann. Damit kann aber auch eine neue Referenzierung der mittels Inkremetalwegmessung bestimmten Absolutposition der Kupplung vorgenommen werden. Auch ist damit eine Plausibilisierung der angenommen Kupplungsposition mit der ermittelten Kupplungsposition möglich und zwar unabhängig von vorher festgelegten Fahrsituationen oder Kupplungssituationen.

Nach einer Weiterbildung der Erfindung ist es vorgesehen, dass die Differenz bei einem Schlupfzustand der Kupplung bestimmt wird. Weist eine Kupplung Schlupf auf, so ist der Betrag des durch sie übertragenen Moments gleich dem eingestellten übertragbaren Moment der Kupplung. Die Kupplung kann nämlich nicht mehr Moment übertragen, weil alles das, was über das eingestellte übertragbare Moment der Kupplung hinausgeht, zu Schlupf führt. Damit ist der Schlupfzustand der Kupplung eine Kenngröße, die in das Verfahren nach der Erfindung Eingang finden kann.

Nach einer Alternative hierzu kann die Erfindung aber auch auf den Haftzustand der Kupplung erweitert werden, nämlich dahingehend, dass die Differenz im Haftzustand der Kupplung bestimmt wird. Hier kann dann auf einen Fehler geschlossen werden, wenn der Betrag des nach der zweiten Methode ermittelten übertragenen Kupplungsmoments, also beispielsweise unter Verwendung des vorstehend beschriebenen Störbeobachters, das nach der ersten Methode bestimmte Kupplungsmoment deutlich übersteigt, wobei beispielsweise auch zeitliche Effekte berücksichtigt werden können, da das übertragene Moment an einer Kupplung nicht größer sein kann als das aktuell übertragbare Moment, welches durch das nach der ersten Methode bestimmte Kupplungsmoment repräsentiert wird.

Das erfindungsgemäße Verfahren kann beispielsweise als Regelkreis in einem Steuergerät für die Ansteuerung des Aktors implementiert werden und hier kann es nach einer Weiterbildung der Erfindung von Vorteil sein, wenn die Differenz zur Verringerung des Einflusses von Parametern der Signalermittlung und/oder der Signalverarbeitung gefiltert wird, also die Momentendifferenz gefiltert wird, um den Einfluss von Zufallseffekten, wie beispielsweise von Messrauschen oder kleiner zeitlicher Verschiebungen aufgrund der Signalermittlung und/oder der Signalverarbeitung zu reduzieren.

Wird bei der vorstehend beschriebenen Bildung der Kupplungsmomentendifferenz festgestellt, dass die Differenz größer ist als der vorbestimmbare Schwellenwert, so kann nach einer Weiterbildung der Erfindung eine Fehlerbehandlungseinrichtung aktiviert werden. Es ist beispielsweise möglich, als Reaktion auf einen erkannten Fehler - die Momentendifferenz ist größer als der vorbestimmbare Schwellenwert - ein FehlerFlag zu setzen und ein Vertrauensmaß für die Kupplungsposition und/oder das Kupplungsmoment zu reduzieren, wie dies in der ebenfalls auf die Anmelderin zurückgehenden DE 10 2004 021 983.4 beschrieben worden ist.

Das erfindungsgemäße Verfahren kann nun beispielsweise dazu verwendet werden, eine angenommene Absolutposition einer mittels eines Aktors mit Inkrementalwegmessung betätigten Kupplung im Triebstrang eines Fahrzeugs zu plausibilisieren.

Das vorgeschlagene Verfahren kann weiterhin zur Überwachung der Funktionsfähigkeit einer Doppelkupplung mit zwei sogenannten zugedrückten Kupplungen, die unter Aufbringen einer Betätigungskraft geschlossen werden und im kraftfreien Zustand selbsttätig öffnen, eingesetzt werden, bei der eine Kupplung ein Moment auf einen Teilantriebsstrang und die andere Kupplung ein Moment auf einen zweiten Teilantriebsstrang übertragen kann, wobei in den Teilantriebssträngen vorgesehene Gänge bei jeweils offener Kupplung eingelegt und ein Schalten durch Überschneiden der beiden Kupplungen erfolgt, so dass ein zuvor mit Moment belasteter Teilantriebsstrang desaktiviert und der andere durch Übertragen von Moment aktiviert wird. Die Steuerung derartiger Überschneidungsschaltungen ist steuerungstechnisch aufwändig und erfordert ein stets vorhersehbares und reproduzierbares Verhalten der Kupplungen bezüglich deren Momentenübertragung. Das vorgeschlagene Verfahren kann das Verhalten der Kupplungen zusätzlich oder alternativ zu den zuvor vorgeschlagenen Lösungen weiter verbessern, indem überwacht wird, ob eine der Kupplungen unerwartet kein Moment überträgt und/oder ob eine der Kupplungen verklemmt ist.

Überträgt eine Kupplung unerwartet kein Moment, kann ein Fehler in der Hardware, beispielsweise in der mechanischen Strecke zwischen einem die Betätigungseinrichtung antreibenden Elektromotor und an der Kupplung angreifenden Einrücker vorliegen, wodurch der für das zu übertragende Moment gewünschte Einrückweg nicht zurückgelegt und die Kupplung daher nicht betätigt wird, beziehungsweise bei Fehlen jeglicher Betätigungskraft komplett öffnet, obwohl eine entsprechende Wegsensorik, die kinematisch vor dem defekten Bauteil angeordnet ist, einen entsprechenden Betätigungsweg anzeigt. Hierdurch ergibt sich eine fehlerhafte Berechnung des übertragenen Kupplungsmoments mittels einer Kennlinie in Abhängigkeit vom Betätigungsweg. Das vorgeschlagene Verfahren wird zur Ermittlung eines Kupplungsfehlers dahingehend genutzt, dass an der offenen Kupplung und/oder bei in diesem Teilantriebsstrang geschalteter Neutralstellung während die andere Kupplung Moment auf das ihr zugeordnete Teilgetriebe überträgt über einen vorgegebenen Zeitraum das aus einer Abschätzung, beispielsweise mittels des Störbeobachters ermittelte Moment mit einem vorgegebenen Schwellenwert verglichen wird. In derselben Weise wird das aus dem Betätigungsweg ermittelte Moment mit einem vorgegebenen Schwellenwert verglichen. Ist das abgeschätzte Moment kleiner und das berechnete Moment größer als die jeweils vorgegebenen Schwellenwerte ist von einer Störung des Betätigungsweges auszugehen und es wird ein Fehlersignal ausgegeben.

In analoger Weise kann das das Verklemmen einer Kupplung oder der zugehörigen Betätigungseinrichtung erkannt und ein entsprechendes Fehlersignal ausgegeben werden. In diesem Falle trennt die Kupplung nicht mehr oder nicht mehr vollständig, während die Wegsensorik einen entsprechenden Weg der Betätigungseinrichtung fälschlicherweise detektiert. Eine Erfassung dieser Fehlersituation erfolgt durch Prüfen, ob ein abgeschätztes Moment größer als ein vorgegebener Schwellwert und das aus der Wegmessung ermittelte Moment kleiner als ein vorgegebener Schwellwert ist. Außerdem wird überprüft, ob zwischen der Kurbelwelle des Antriebsmotor und der Getriebeeingangswelle der Schlupf unter einer vorgegebenen Schwellenwert ist. Wenn alle drei Bedingungen erfüllt sind, wird ein Fehlersignal ausgegeben. Durch die Prüfung der aus dem Kupplungsweg ermittelten Moments und des Schlupfes werden Fehlinterpretationen ausgeschlossen, die daraus resultieren, dass während des vorgegebenen Beobachtungszeitraumes die Kupplung keinen Schlupf zeigt, weil lediglich sehr kleine Momente übertragen werden.

Schließlich schafft die Erfindung auch noch eine Vorrichtung zur Bestimmung oder Überprüfung der Kupplungsposition einer mittels eines Aktors automatisiert betätigten Kupplung im Triebstrang eines einen Antriebsmotor aufweisenden Fahrzeugs mittels des von der Kupplung übertragenen Kupplungsmoments, wobei die Vorrichtung von dem vorstehend geschilderten Verfahren Gebrauch machen kann und mindestens einen Sensor besitzt zur Inkrementalwegmessung des Aktors und ein Steuergerät mit einer Auswerteeinrichtung für Zustandsdaten des Antriebsmotors, insbesondere des Motormoments und der Motordrehzahl, sowie die Bestimmung eines übertragenen Kupplungsmoments anhand der Kupplungsposition und/oder der Zustandsdaten, insbesondere der Motordrehzahl sowie des Motormoments.

Bei dieser Vorrichtung kann es sich beispielsweise um ein Steuergerät für den Aktor zur automatisierten Betätigung der Kupplung handeln oder auch um ein anderes im Fahrzeug vorhandenes Steuergerät. Diesem Steuergerät wird beispielsweise über ein Bussystem im Fahrzeug in der Form beispielsweise des CAN-Busses das Motormoment und die Motordrehzahl von der Motorsteuerung zugeführt und im Steuergerät kann der vorstehend erwähnte Störbeobachter implementiert sein, der das übertragene Kupplungsmoment als eine zu schätzende Störgröße für die Dynamik des Antriebsmotors betrachtet und das übertragene Kupplungsmoment ermittelt, welches dann mit dem beispielsweise anhand eines Kupplungsmodells, das ebenfalls im Steuergerät implementiert sein kann, auf der Basis der angenommenen aktuellen Kupplungsposition ein übertragenes Kupplungsmoment bestimmt und dann eine Differenz bildet zwischen dem zweiten, vom Störbeobachter ermittelten übertragenen Kupplungsmoment und dem ersten, auf der Basis der angenommenen aktuellen Kupplungsposition ermittelten Kupplungsmoment und diese Differenz dann auswertet bezüglich der Frage, ob sie kleiner ist als der vorbestimmbare Schwellenwert und somit beide Methode zu einem in sich konsistenten Ergebnis geführt haben und damit die aktuell angenommene Kupplungsposition der tatsächlichen aktuellen Kupplungsposition entspricht.

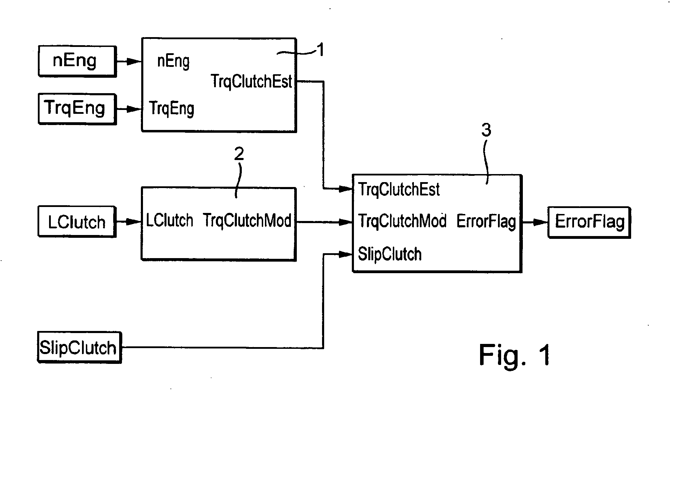

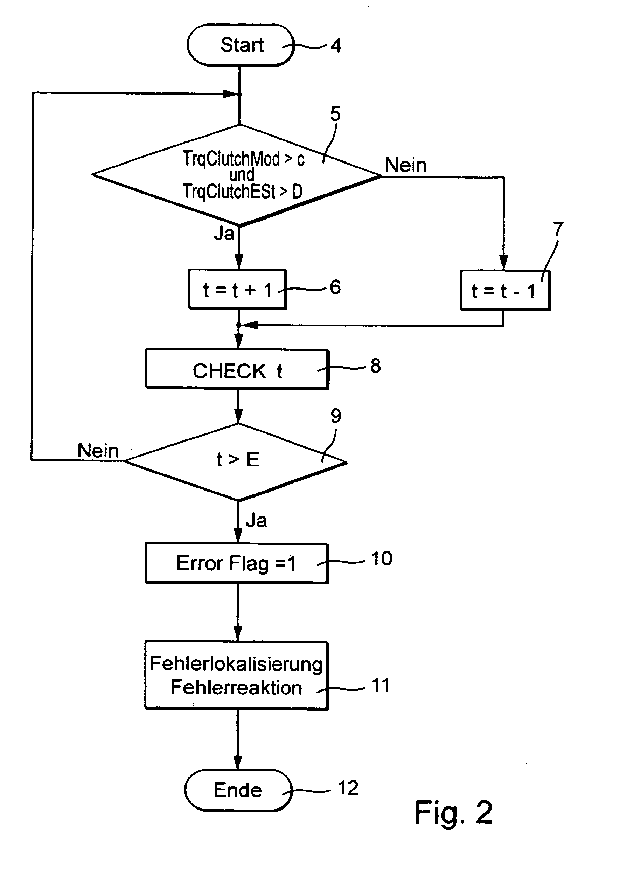

Die Erfindung wird im Folgenden anhand der Figuren 1 und 2 näher erläutert, die ein Blockschaltbild zur Erläuterung des erfindungsgemäßen Verfahrens und ein Flussdiagramm eines Ausgestaltungsbeispiels einer Fehlerermittlung zeigen..

Figur 1 zeigt in Block 1 einen Störbeobachter, der auf der Basis von Zustandsdaten des Antriebsmotors in der Form der Motordrehzahl nEng und des Motormoments TrqEng eine Schätzgröße ermittelt für das von der Kupplung übertragene Kupplungsmoment.

Auf der Basis der angenommenen aktuellen Kupplungsposition LClutch wird im Block 2 das übertragbare Kupplungsmoment anhand einer ersten Methode ermittelt und beide Ergebnisse werden dann einem Auswerteblock 3 zugeführt.

In den Auswerteblock 3 geht auch der Schlupfzustand SlipCIutch der Kupplung ein, wodurch überprüft werden kann, ob sich die Kupplung in einem Schlupfzustand befindet. Im Auswerteblock 3 wird bei Vorliegen von Kupplungsschlupf die vorstehend beschriebene Differenzbildung zwischen dem nach der zweiten Methode im Block 1 ermittelten übertragenen Kupplungsmoment und dem im Block 2 nach der ersten Methode ermittelten übertragenen Kupplungsmoment vorgenommen.

Ist diese Differenz kleiner als ein vorbestimmbarer Schwellenwert, so wird daraus geschlossen, dass die angenommene aktuelle Kupplungsposition der tatsächlichen aktuellen Kupplungsposition entspricht. Im Fehlerfall, wenn nämlich der Betrag der Differenz der nach beiden Methoden ermittelten übertragenen Kupplungsmomente den vorbestimmbaren Schwellenwert überschreitet, wird ein Fehlerflag ErrorFlag gesetzt.

Damit macht es die Erfindung möglich, die aktuelle Kupplungsposition im laufenden Fahrbetrieb des Fahrzeugs ständig zu plausibilisieren und zu referenzieren und nicht nur beispielsweise im vollständig offenen oder vollständig geschlossenen Zustand der Kupplung.

Figur 2 zeigt ein Flussdiagramm zur Überprüfung einer geöffneten Kupplung einer Doppelkupplung während die andere Kupplung Moment auf den ihm zugeordneten Teilantriebsstrang überträgt. Ausgehend von einem Block 4 wird in der Verzweigung 5 geprüft, ob das gemäß der beispielsweise im Blockschaltbild der Figur 1 bestimmte Moment TrgClutchMod aus Wegmessung der Kupplung größer als eine Konstante C ist. Weiterhin wird geprüft, ob das Moment aus dem Störbeobachter abgeschätzte Moment TrqClutchEst kleiner als eine Konstante D ist. Die Konstanten C und D können identisch sein. Die Zeitzähler 6, 7 sowie der Block 8 stellen sicher, dass bei nicht Vorliegen der Bedingung der Verzweigung 5 eine gewisse Zeit gemessen wird. Ist eine gewisse Ablaufzeit t vergangen, wird aus Block 8 heraus das Programm ohne weitere Schritte verlassen, wenn keine abweichende Bedingung in Verzweigung festgestellt wurde. Die Verzweigung 9 stellt sicher, dass bei vorliegender Abweichung in Verzweigung 5 mehrfach für eine der Konstante E entsprechende Zeit t gemessen wird. Es versteht sich, dass die Steuerung der Zeiten und Häufigkeiten des Durchlaufs der Verzweigung 5 auch anders gelöst werden kann. Ist eine Verletzung der Bedingungen in Verzweigung 5 festgestellt, wird in Block 10 eine Fehlermarke ErrorFlag gesetzt und abhängig von dieser in Block 11 angestoßen, die eine Fehlerlokalisierung und/oder eine Fehlerreaktion, beispielsweise einen Notbetrieb des Fahrzeuges, bei dem nur die fehlerfreie Kupplung und deren zugeordneter Teilantriebsstrang genutzt wird, vorsieht. In Block 12 wird die Routine beendet. In einer ähnlichen Routine kann das Verklemmen einer Kupplung geprüft werden. Hierzu werden die gegebenenfalls die konstanten C, D und E angepasst sowie die Ablaufzeit t. Weiterhin wird in der Verzweigung 5 eine Bedingung TrqClutchMod < C mittels der logischen Verknüpfung "UND" mit der Bedingung TrqClutchEST > D und der Bedingung eines vernachlässigbaren Schlupfes zwischen Kurbelwelle des Antriebsmotors und der Getriebeeingangswelle der zu prüfenden Kupplung verknüpft.

Hinsichtlich vorstehend im Einzelnen nicht näher erläuterter Merkmale der Erfindung wird im Übrigen ausdrücklich auf Ansprüche und die Zeichnungen verwiesen.

### Bezugszeichenliste

- 1: Block
- 2: Block
- 3: Auswerteblock
- 4: Block
- 5: Verzweigung
- 6: Zeitzähler
- 7: Zeitzähler
- 8: Block
- 9: Verzweigung
- 10: Block
- 11: Block
- 12: Block

## Patentansprüche

1. Verfahren zur Bestimmung oder Überprüfung der Kupplungsposition einer mittels eines Aktors automatisiert betätigten Kupplung im Triebstrang eines einen Antriebsmotor aufweisenden Fahrzeugs mittels des von der Kupplung übertragenen Kupplungsmoments, **dadurch gekennzeichnet, dass** anhand der aktuell angenommenen Kupplungsposition ein erstes übertragenes Kupplungsmoment nach einer ersten Methode bestimmt wird und ein zweites übertragenes Kupplungsmoment nach einer zweiten Methode auf der Basis von Zustandsdaten des Antriebsmotors bestimmt wird und eine Differenz der nach beiden Methoden bestimmten übertragenen Kupplungsmomente ermittelt wird derart, dass die angenommene Kupplungsposition der tatsächlichen Kupplungsposition entspricht, wenn die Differenz kleiner einem vorbestimmbaren Schwellenwert ist.

2. Verfahren nach Anspruch 1, **dadurch gekennzeichnet, dass** der vorbestimmbare Schwellenwert in Abhängigkeit von zur Bestimmung der Differenz heran gezogener Zustandsdaten und/oder der aktuell angenommenen Kupplungsposition bestimmt wird.

3. Verfahren nach Anspruch 1 oder 2, **dadurch gekennzeichnet, dass** das erste übertragene Kupplungsmoment anhand einer das Kupplungsmoment als Funktion der Kupplungsposition bestimmenden Beziehung bestimmt wird.

4. Verfahren nach einem der vorstehenden Ansprüche, **dadurch gekennzeichnet, dass** das zweite übertragene Kupplungsmoment mittels eines Beobachters, insbesondere Störbeobachters und der Drehzahl und des Motormoments des Antriebsmotors bestimmt wird.

5. Verfahren nach einem der vorstehenden Ansprüche, **dadurch gekennzeichnet, dass** die Differenz bei einem Schlupfzustand der Kupplung bestimmt wird.

6. Verfahren nach einem der Ansprüche 1 bis 5, **dadurch gekennzeichnet, dass** die Differenz im Haftzustand der Kupplung bestimmt wird.

7. Verfahren nach einem der Ansprüche 1 bis 6, **dadurch gekennzeichnet, dass** in einem Doppelkupplungsgetriebe das zu übertragende Moment einer Kupplung überprüft wird, während die andere Kupplung geöffnet ist.

8. Verfahren nach Anspruch 7, **dadurch gekennzeichnet, dass** ein Fehlersignal ausgegeben wird, wenn in einem vorgegebenen Beobachtungszeitraum ein mittels eines Modells bestimmte Größe für das zu übertragende Moment größer als ein Schwellenwert für das Modell und das ermittelte übertragene Moment kleiner als ein für das ermittelte Moment vorgegebener Schwellenwert ist.

9. Verfahren nach Anspruch 7, **dadurch gekennzeichnet, dass** ein Fehlersignal ausgegeben wird, wenn in einem vorgegebenen Beobachtungszeitraum ein mittels eines Modells bestimmte Größe für das zu übertragende Moment kleiner als ein Schwellenwert für das Modell und das ermittelte übertragene Moment größer als ein für das ermittelte Moment vorgegebener Schwellenwert ist.

10. Verfahren nach einem der vorstehenden Ansprüche, **dadurch gekennzeichnet, dass** die Differenz zur Verringerung des Einflusses von Parametern der Signalermittlung und/oder der Signalverarbeitung gefiltert wird.

11. Verfahren nach einem der vorstehenden Ansprüche, **dadurch gekennzeichnet, dass** das erste übertragene Kupplungsmoment in Abhängigkeit von Zustandsdaten des Antriebsmotors, insbesondere der Drehzahl und des Motormoments und/oder adaptierter Kupplungsparameter bestimmt wird.

12. Verfahren nach einem der Ansprüche 4 bis 8, **dadurch gekennzeichnet, dass** mittels des Störbeobachters auf der Basis von Drehzahl und Motormoment des Antriebsmotors das zweite übertragene Kupplungsmoment geschätzt wird und die Differenz gebildet wird zwischen dem ersten übertragenen Kupplungsmoment und dem geschätzten zweiten Kupplungsmoment.

13. Verfahren nach einem der vorstehenden Ansprüche, **dadurch gekennzeichnet, dass** bei einer den vorbestimmbaren Schwellenwert überschreitenden Differenz eine Fehlerbehandlungseinrichtung aktiviert wird.

14. Verwendung des Verfahrens nach einem der vorstehenden Ansprüche zur Plausibilisierung der angenommenen Absolutposition einer mittels eines Aktors mit Inkrementalwegmessung betätigten Kupplung im Triebstrang eines Fahrzeugs.

15. Vorrichtung zur Durchführung des Verfahrens zur Bestimmung der Kupplungsposition einer mittels eines Aktors automatisiert betätigten Kupplung im Triebstrang eines einen Antriebsmotor aufweisenden Fahrzeugs mittels des von der Kupplung übertragenen Kupplungsmoments, nach einem der Ansprüche 1 bis 11, **gekennzeichnet durch** mindestens einen Sensor zur Inkrementalwegmessung des Aktors und ein Steuergerät mit einer Auswerteeinrichtung für Zustandsdaten des Antriebsmotors, insbesondere des Motormoments und der Motordrehzahl sowie die Bestimmung eines übertragenen Kupplungsmoments anhand der Kupplungsposition und/oder der Zustandsdaten, insbesondere der Motordrehzahl sowie des Motormoments.

## Claims

1. Method for determining or checking the clutch position of a clutch, which is actuated in an automated fashion by means of an actuator and which is situated in the drivetrain of a vehicle which has a drive engine, by means of the clutch torque transmitted by the clutch, **characterized in that**, on the basis of the presently assumed clutch position, a first transmitted clutch torque is determined according to a first method and a second transmitted clutch torque is determined according to a second method on the basis of state data of the drive engine, and a difference between the transmitted clutch torques determined according to the two methods is determined such that the assumed clutch position corresponds to the actual clutch position if the difference is smaller than a predeterminable threshold value.

2. Method according to Claim 1, **characterized in that** the predeterminable threshold value is determined as a function of state data taken into consideration for determining the difference and/or as a function of the presently assumed clutch position.

3. Method according to Claim 1 or 2, **characterized in that** the first transmitted clutch torque is determined on the basis of a relationship which determines the clutch torque as a function of the clutch position.

4. Method according to one of the preceding claims, **characterized in that** the second transmitted clutch torque is determined by means of an observer, in particular a disturbance observer, and the rotational speed and the engine torque of the drive engine.

5. Method according to one of the preceding claims, **characterized in that** the difference is determined when the clutch is in a slipping state.

6. Method according to one of Claims 1 to 5, **characterized in that** the difference is determined when the clutch is in the sticking state.

7. Method according to one of Claims 1 to 6, **characterized in that**, in a double clutch gearbox, the torque to be transmitted by one clutch is checked while the other clutch is open.

8. Method according to Claim 7, **characterized in that** a fault signal is output if, in a predefined observation time period, a value, determined by means of a model, for the torque to be transmitted is greater than a threshold value for the model and the determined transmitted torque is lower than a threshold value predefined for the determined torque.

9. Method according to Claim 7, **characterized in that** a fault signal is output if, in a predefined observation time period, a value, determined by means of a model, for the torque to be transmitted is lower than a threshold value for the model, and the determined transmitted torque is greater than a threshold value predefined for the determined torque.

10. Method according to one of the preceding claims, **characterized in that** the difference is filtered in order to reduce the influence of parameters of the signal determination and/or signal processing.

11. Method according to one of the preceding claims, **characterized in that** the first transmitted clutch torque is determined as a function of state data of the drive engine, in particular the rotational speed and the engine torque and/or adapted clutch parameters.

12. Method according to one of Claims 4 to 8, **characterized in that**, by means of the disturbance observer, the second transmitted clutch torque is estimated on the basis of the rotational speed and engine torque of the drive engine, and the difference is formed between the first transmitted clutch torque and the estimated second clutch torque.

13. Method according to one of the preceding claims, **characterized in that** a fault handling unit is activated if the difference exceeds a predeterminable threshold value.

14. Use of the method according to one of the preceding claims for checking the plausibility of the assumed absolute position of a clutch, which is actuated by means of an actuator with incremental travel measurement, in the drivetrain of a vehicle.

15. Device for carrying out the method for determining the clutch position of a clutch, which is actuated in an automated fashion by means of an actuator and which is situated in the drivetrain of a vehicle which has a drive engine, by means of the clutch torque transmitted by the clutch according to one of Claims 1 to 11, **characterized by** at least one sensor for incremental travel measurement of the actuator and by a control unit having an evaluating unit for state data of the drive engine, in particular of the engine torque and of the engine rotational speed, and for determining a transmitted clutch torque on the basis of the clutch position and/or the state data, in particular the engine rotational speed and the engine torque.

## Revendications

1. Procédé pour déterminer ou vérifier au moyen du couple d'embrayage transmis par l'embrayage la position d'embrayage d'un embrayage actionné de manière automatique par un actionneur dans le train d'entraînement d'un véhicule qui présente un moteur d'entraînement,
**caractérisé en ce que**
un premier couple d'embrayage transmis est déterminé par une première méthode sur la base de la position prise effectivement par l'embrayage et un deuxième couple d'embrayage transmis est déterminé par une deuxième méthode sur la base de données d'état du moteur d'entraînement et
**en ce que** la différence entre les couples d'entraînement transmis déterminés par les deux méthodes est déterminée de telle sorte que la position d'embrayage prise corresponde à la position d'embrayage effective lorsque la différence est inférieure à une valeur de seuil prédéterminée.

2. Procédé selon la revendication 1, **caractérisé en ce que** la valeur de seuil prédéterminée est déterminée en fonction de données d'état intervenant dans la détermination de la différence et/ou de la position effectivement prise par l'embrayage.

3. Procédé selon les revendications 1 ou 2, **caractérisé en ce que** le premier couple d'embrayage transmis est déterminé à l'aide d'une équation qui définit le couple d'embrayage en fonction de la position de l'embrayage.

4. Procédé selon l'une des revendications précédentes, **caractérisé en ce que** le deuxième couple d'embrayage transmis est déterminé au moyen d'un observateur, en particulier d'un observateur de perturbations, de la vitesse de rotation et du couple du moteur d'entraînement.

5. Procédé selon l'une des revendications précédentes, **caractérisé en ce que** la différence est déterminée lorsque l'embrayage est en situation de patinage.

6. Procédé selon l'une des revendications 1 à 5, **caractérisé en ce que** la différence est déterminée lorsque l'embrayage est en situation d'adhérence.

7. Procédé selon l'une des revendications 1 à 6, **caractérisé en ce que** dans une transmission à double embrayage, le couple à transmettre par un embrayage est vérifié pendant que l'autre embrayage est ouvert.

8. Procédé selon la revendication 7, **caractérisé en ce qu'**un signal d'erreur est délivré si dans un intervalle d'observation prédéterminé, une grandeur déterminée au moyen d'un modèle pour le couple à transmettre est supérieure à une valeur de seuil du modèle et si le couple transmis ainsi déterminé est inférieur à une valeur de seuil prédéterminée pour le couple déterminé.

9. Procédé selon la revendication 7, **caractérisé en ce qu'**un signal d'erreur est délivré si dans un intervalle d'observation prédéterminé, une grandeur définie au moyen d'un modèle pour le couple à transmettre est inférieure à une valeur de seuil du modèle et si le couple transmis ainsi déterminé est supérieur à une valeur de seuil prédéterminée pour le couple déterminé.

10. Procédé selon l'une des revendications précédentes, **caractérisé en ce que** la différence est filtrée pour diminuer l'influence de paramètres de la détermination des signaux et/ou du traitement des signaux.

11. Procédé selon l'une des revendications précédentes, **caractérisé en ce que** le premier couple transmis par l'embrayage est déterminé en fonction de données d'état du moteur d'entraînement, en particulier de la vitesse de rotation et du couple du moteur, et/ou de paramètres adaptés de l'embrayage.

12. Procédé selon l'une des revendications 4 à 8, **caractérisé en ce que** le deuxième couple d'embrayage transmis est estimé au moyen de l'observateur de perturbations et sur la base de la vitesse de rotation et du couple du moteur d'entraînement, la différence étant formée entre le premier couple d'embrayage transmis et le deuxième couple d'embrayage estimé.

13. Procédé selon l'une des revendications précédentes, **caractérisé en ce qu'**un dispositif de traitement des défauts est activé lorsque la différence dépasse la valeur de seuil prédéterminée.

14. Utilisation du procédé selon l'une des revendications précédentes pour rendre plausible la position absolue prise par un embrayage actionné au moyen d'un actionneur avec une mesure du parcours incrémentiel dans le train d'entraînement d'un véhicule.

15. Dispositif en vue de l'exécution du procédé selon l'une des revendications 1 à 11 pour déterminer au moyen du couple d'embrayage transmis par l'embrayage la position d'un embrayage actionné de manière automatique au moyen d'un actionneur dans le train d'entraînement d'un véhicule qui présente un moteur d'entraînement, **caractérisé par**
au moins un détecteur de mesure du parcours incrémentiel de l'actionneur,
par un appareil de commande qui présente un dispositif d'évaluation des données d'état du moteur d'entraînement, en particulier du couple du moteur et de la vitesse de rotation du moteur, ainsi que
par la détermination du couple d'entraînement transmis, à l'aide de la position de l'embrayage et/ou des données d'état et en particulier de la vitesse du moteur ainsi que du couple du moteur.
